# EUROPÄISCHE PATENTSCHRIFT

(11) **EP 0 676 093 B1**
(45) Veröffentlichungstag und Bekanntmachung des Hinweises auf die Patenterteilung: **21.01.1998**
(21) Anmeldenummer: 94930917.3
(22) Anmeldetag: 20.10.1994
(51) Int. Cl.: H02G 3/22

(54) **KABELDURCHFÜHRUNG**
CABLE FEEDTHROUGH
PASSE-FIL

(30) Priorität: 25.10.1993 DE 9316279 U
(43) Veröffentlichungstag der Anmeldung: 11.10.1995
(73) Patentinhaber: STRIEBEL & JOHN GmbH & Co. KG, D-77880 Sasbach (DE)
(72) Erfinder: STRIEBEL, Franz, D-77880 Sasbach (DE); KOCH, Peter, D-77871 Renchen (DE); WICKERMANN, Hans, D-77830 Bühlertal (DE)
(74) Vertreter: Thoma, Friedrich, Dipl.-Ing.(FH)
(86) Internationale Anmeldenummer: DE9401241
(87) Internationale Veröffentlichungsnummer: WO9512234

(56) Entgegenhaltungen:
- WO-A-89/07851

## Beschreibung

Die Erfindung betrifft eine, insbesondere plattenförmige, Kabeldurchführung für eine Gehäusewandung, insbesondere für eine Wand oder Dekke, oder für einen Boden eines Verteilerschrankes, eines Verteilerkastens, bzw. einer Verteilerdose, oder eines Zählerschrankes, oder dergl., mit den Merkmalen nach dem Oberbegriff des Schutzanspruchs 1.

Bei derartigen Kabeldurchführungen ist es erforderlich, daß dort die einzelnen Kabel, mit beliebigem Kabelquerschnitt, an jeder beliebigen Stelle der vorgesehenen Kabeldurchführungsfläche, zweckmäßig, auch bei schrägverlaufender Kabelführung, hinreinreichend dauerhaft, insbesondere dauerelastisch, dicht, in derartige Schränke, Kästen oder Dosen geführt werden können. Dabei soll sichergestellt sein, daß dort zur Vorbereitung und Herstellung einer Kabeldurchführung keine speziellen konstruktiven Voraussetzungen, Vorrichtungen oder Spezialwerkzeuge erforderlich sind.

Aus der DE-PS 39 15 007 ist eine Kabeldurchführung für eine Gehäusewandung eines Verteilerkastens, bzw. -schrankes oder Zählerschrankes bekannt, bei der eine weichelastische Platte, z.B. aus Gummi oder einem Thermoplast vorgesehen ist, in deren Vollmaterial eine Vielzahl von Ausnehmungen kreisförmigem Querschnitt in räumlich klar definierter Ausrichtung, sortiert nach Querschnittsgröße, nahe beieinander angeordnet sind, die dort drei zueinander unterschiedliche Größen für drei verschiedene Kabelquerschnitte aufweisen, dabei erheben sich über diesen Ausnehmungen kegelstumpfförmige Ausbildungen, die aus demselben weichelastischen Material der Platte einstückig hergestellt sind, und auf deren Spitze eine herausgehobene Noppe, oder Sollbruchstelle angeformt ist.

Diese Kabeldurchführung ist nicht nur mit dem erheblichen Nachteil behaftet, daß dort die einzelnen Kabeldurchführungen durch die kreisförmigen Ausnehmungen, deren räumliche Lage und Durchmessergröße auf der Platte klar festgelegt sind, sondern auch, daß die kegelstumpfförmigen folienartigen weichelastischen Ausbildungen nur begrenzt dehnbar sind, sodaß dort die Installation der Kabelführung erheblich eingeschränkt ist. Außerdem wird dort, durch diese begrenzte Festlegung der einzelnen Ausnehmungen, hinsichtlich der Anordnung, Anzahl und Durchmessergrößen der Ausnehmungen und/oder der dazu angeordneten kegelstumpfförmigen Ausbildungen, erfahrungsgemäß eine Vielzahl zueinander unterschiedlicher derartiger Kabeldurchführungen, mit dem dadurch notwendigen erheblichen Werkzeugaufwand und einer unwirtschaftlichen Lagerhaltung mit derartigen Kabeldurchführungen erforderlich.

Bei einer anderen bekannten derartigen Kabeldurchführung besteht dort die flächenebene Platte aus einem relativ porösen Kunststoff. In diese Platte wird, den jeweiligen Lage- und Durchmessererfordernissen entsprechend, mit einem Messer oder einer Schere eine Kabeldurchführung eingeschnitten. Diese Art der Kabeldurchführung ist mit dem Nachteil behaftet, daß dort keine zuverlässig dichte Kabeldurchführung erzielbar ist. Außerdem hat sich dort in der Praxis herausgestellt, daß die mit großem Aufwand und Präzision manuell hergestellten Kabeldurchführungen, aufgrund des nur wenig dehnfähigen Materials vielfach aufreisen und damit undicht sind. Schrägverlaufende Kabeleinführungen sind in zuverlässig dichter Ausführung nicht, oder nur eingeschränkt herstellbar. Eine dauerhaft zuverlässige Dichtung zwischen Kabelmantel und Kabeldurchführung ist nur erheblich eingeschränkt erzielbar. Darüberhinaus ist der manuelle herstellungstechnische Aufwand zum präzisen Ausschneiden der einzelnen erforderlichen Kabeldurchführungen unrationell und unwirtschaftlich.

Außerdem ist aus der WO-A-8907851 eine Kabeldurchführung aus einem weichelastischen Werkstoff mit einer Härte von 70 bis 95 Shore-A bekannt, die von einem Rahmen umrahmt ist. Dieser relativ harte Werkstoff ist nur für bestimmte, im Außendurchmesser kleine und hinreichend senkrecht verlaufend verlegte Kabel geeignet und ist damit nicht universell einsetzbar.

Der Erfindung liegt die Aufgabe zugrunde, eine Kabeldurchführung der eingangsgenannten Art zu schaffen, die die Nachteile der bekannten Ausführungen beseitigt, und mit der einfach, spezialwerkzeuglos und wirtschaftlich an jeder beliebigen Stelle der flächigen Kabeldurchführung und für jeden Kabelquerschnitt, auch bei einem Schrägverlauf eines Kabels, oder einer nachträglichen Installation, eine hinreichende, dauerhafte und zuverlässig dichte Kabeldurchführung erzielbar ist.

Diese Aufgabe wird mit den Merkmalen im kennzeichnenden Teil des Schutzanspruchs 1 gelöst und in den Unteransprüchen sind weitere vorteilhafte Einzelheiten beansprucht.

Vorteilhaft bei dieser neuen plattenförmigen, insbesondere flächeneben ausgebildeten, Kabeldurchführung ist nicht nur, daß dort durch den Einsatz eines elastischen, hochdehnfähigen und hochreißfesten thermoplastischen Werkstoffs mit einer Härte von 4 bis 30 Shore-A, mit einer Reißdehnungseigenschaft von 400 bis 700 % und einer Weiterreißfestigkeit von 9 bis 14 N/mm, Kabel mit relativ großen Querschnitt- bzw. Außendurchmesserunterschieden, durch einfache, relativ ungenau herzustellende Durchbrüche, insbesondere sogenannter Hilfslöcher, die zunächst an beliebigen Stellen, oder den erforderlichen Kabeleinführungsstellen, zweckmäßigerweise eingestochen werden, absolut formdicht, führbar sind, sondern auch, daß der dort eingesetzte hochdehnfähige, hochelastische und hochreißfeste Werkstoff es auch zuverlässig gewährleistet, daß auch schräg durch die Kabeldurchführung verlaufende Kabel hinreichend dauerhaft dicht zum Kabelaußenmantel geführt sind. Außerdem ist von erheblichem Vorteil, daß diese Kabeldurchführungsfläche dort optimal ausgenutzt werden kann. Vorteilhaft ist ferner die einfache, rationelle, zweckmäßige und wirtschaftliche thermoplastische Herstellung der neuen Kabeldurchführung, die sowohl einstückig mit einem Verteilerkasten, einem Verteilerschrank, bzw. einer Verteilerdose, oder einem Zählerschrank, oder dergl. als Wand, Boden, Decke dienend, verbunden ist, oder daß erforderlichenfalls, diese Kabeldurchführung als flanschartiges, insbesondere einstückig ausgebildetes, Einzelelement, mit einem endlos umlaufenden, verstärkten, stabilen Rand, bzw. Rahmen aus einem entsprechend harten Werkstoff, hergestellt ist, das an die jeweiligen Verteilerschränke, -kästen, -dosen oder dergl. anbaubar ist.

Ausführungsbeispiele der Erfindung sind in den Zeichnungen dargestellt und werden im folgenden näher erläuter. Es zeigen
- Fig. 1: eine schaubildliche Ansicht einer Verteilerdose mit abgenommenen, fehlendem Deckel und mit auf den einzelnen Wänden vorgesehenen Kabeldurchführungsplatten,
- Fig. 2: eine Draufsicht auf eine flanschartige Kabeldurchführung, insbesondere für einen Verteilerkasten oder einem Verteilerschrank,
- Fig. 3: eine schaubildliche Draufsicht auf die Kabeldurchführung nach Fig. 2,
- Fig. 4: eine schaubildliche Rückansicht auf die Kabeldurchführung nach Fig. 2 und 3 und
- Fig. 5: eine Längsschnittansicht durch die Kabeldurchführung nach Fig. 2 bis 4.

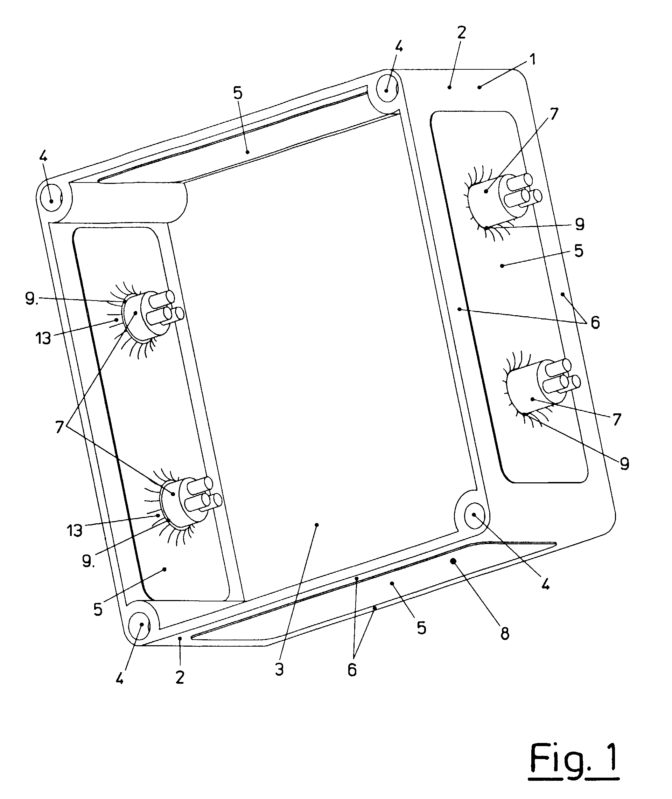

Die, in der Fig. 1 dargestellte, offene Verteilerdose 1, die aus einem Isolierwerkstoff hergestellt und hier mit einem insbesondere quadratischen Querschnitt ausgebildet ist, besteht dort im wesentlichsten aus den vier Wänden 2 und dem Boden 3. 4 bezeichnet Montagebefestigungslöcher. 5 zeigt plattenförmige Kabeldurchführungen, die im Bereich insbesondere aller vier Wände 2, in die dort insbesondere vorgesehenen Rahmen 6 eingearbeitet sind. 7 bezeichnet Kabel, die durch die Kabeldurchführungen 5 installationskonform in die Verteilerdose 1 geführt sind.

Die plattenförmigen Kabeldurchführungen 5, sind aus einem hochdehnfähigen, hochelastischen und hochreißfesten, insbesondere thermoplastisch verarbeitbaren, makromolekularen Werkstoff mit einer Härte von 4 bis 30 Shore-A, einer Reißdehnungseigenschaft von 400 bis 700 % und mit einer Weiterreißfestigkeit von 9 bis 14 N/mm, in einem wirtschaftlichen Herstellungsverfahren, einstückig, stoffschlüssig in die Rahmen 6 der Wände 2 eingespritzt.

Damit wird sichergestellt, daß ein relativ einfach hergestelltes Hilfsloch 8 mit einem relativ kleinen Durchmesser, zur Durchführung eines relativ dicken Kabels 7 problemlos und zuverlässig relativ weit dehnbar ist, wobei dieser elastomere Werkstoff mit relativ großer, hochelastischer Spannung am äußeren Umfang eines Kabels 7 mit einem beliebigen Querschnitt, dauerhaft und zuverlässig dicht anliegt. Dabei ist dort von besonderem Vorteil, daß die Kabeldurchführungsfläche 9 dauerhaft relativ weich ist.

Wie die Fig. 1 desweiteren zeigt, sind die Flächen der Kabeldurchführungen 5 optimal ausnutzbar, d.h. eine Durchführung der einzelnen Kabelquerschnitte ist an jeder beliebigen Stelle der Kabeldurchführungen 5 möglich.

Es liegt hier im Rahmen der Erfindung, daß die in der Fig. 1 gezeigte Verteilerdose 1 vollständig aus einem elastomeren Werkstoff mit den vorgenannten Eigenschaften hergestellt ist.

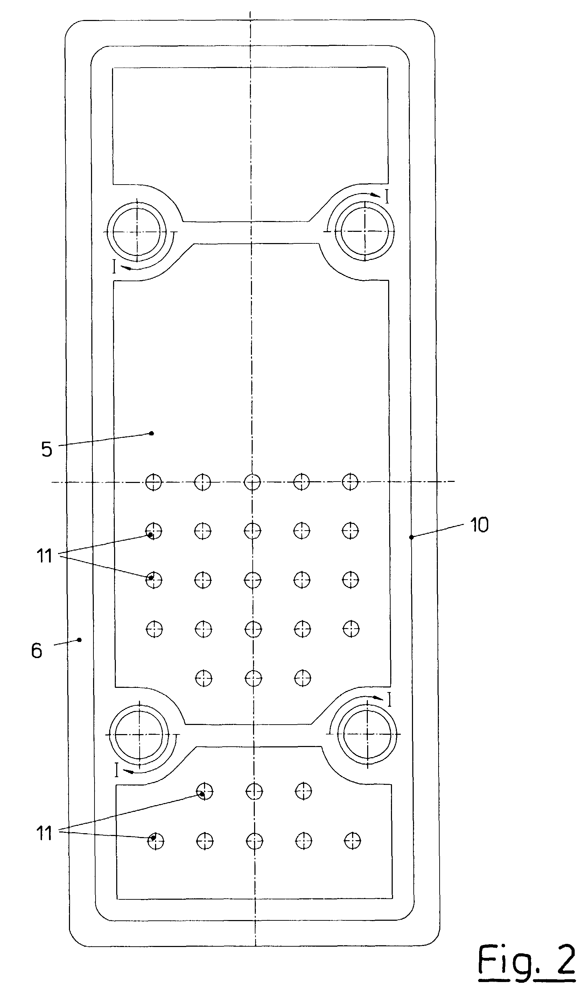

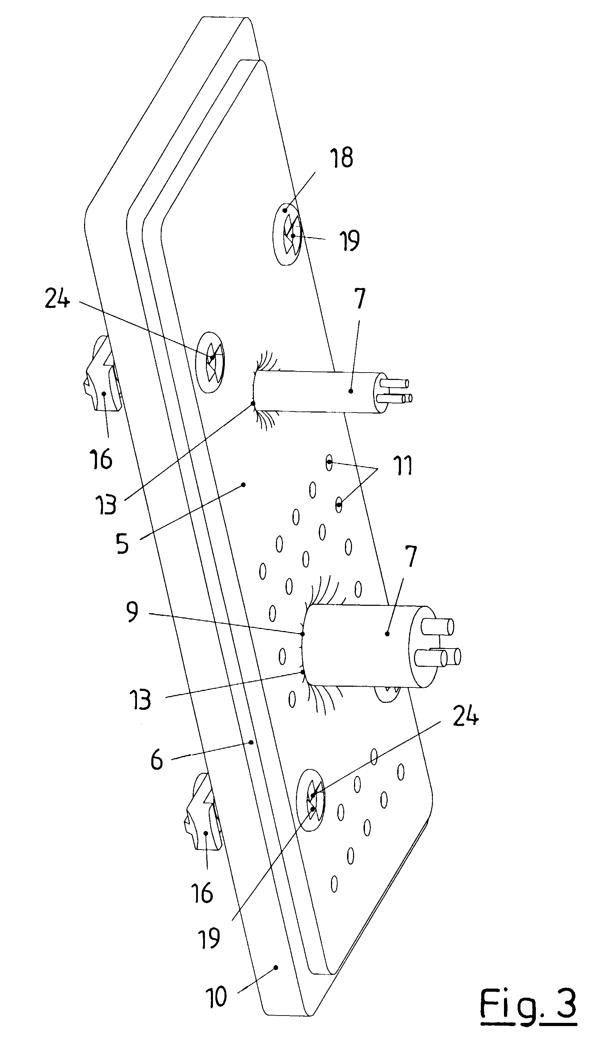

Die Fig. 2 bis 5 zeigen eine flanschartig ausgebildete Kabeldurchführung 5 mit einem am äußeren Umfang endlos umlaufenden stabilen Rand oder Rahmen 6, der insbesondere aus einem relativ harten Werkstoff hergestellt ist. Die dort aus einem elastomeren Werkstoff hergestellte, platten- oder flächenförmige Kabeldurchführung 5 ist insbesondere einstückig, stoffschlüssig mit dem Rand oder Rahmen 6 verbunden. Dabei kann den jeweiligen Ausgestaltungen entsprechend, die Kabeldurchführung 5 räumlich, insbesondere in der Höhe zum Rahmen 6 abgesetzt angeordnet sein, wie dies aus den Fig. 3 bis 5 näher ersichtlich ist. 11 bezeichnet sogenannte Sollbruchstellen, die ein- oder beidseitig, insbesondere einander koaxial gegenüberliegend, auf der flächigen Kabeldurchführung 5 an bestimmten Stellen, insbesondere rasterartig verteilt, angeordnet sind. Derartige Sollbruchstellen 11 können punktförmig und/oder in einem bestimmten oder mit verschiedenem Durchmesser vorgesehen sein.

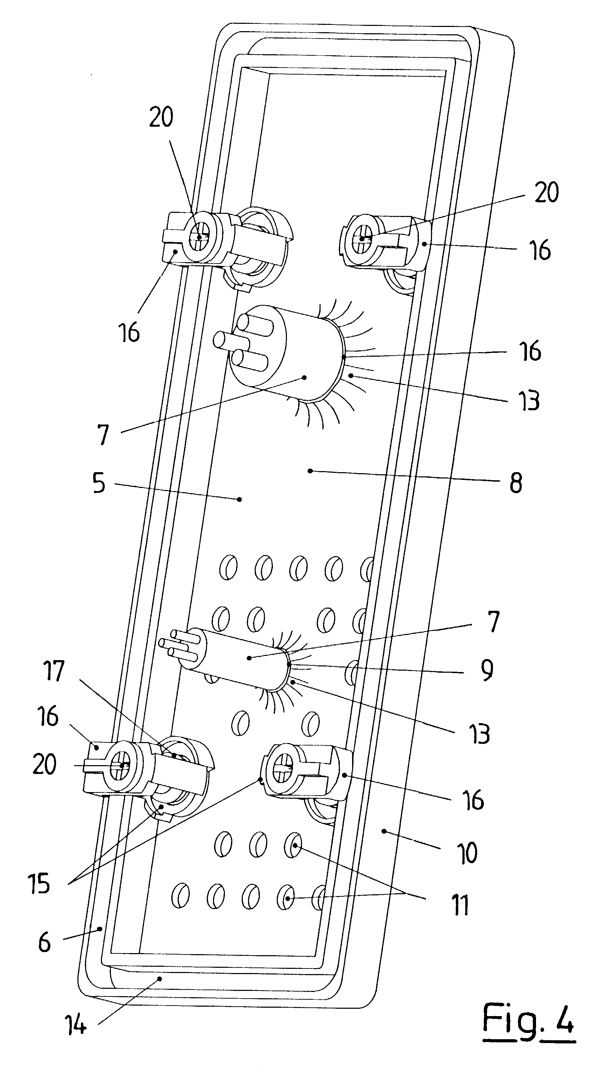

In der Fig. 3 und 4 bezeichnet 7 Kabel mit zueinander verschiedenem Querschnitt, die durch die Kabeldurchführung 5 geführt sind. Es ist dort klar ersichtlich. wie sich, je nach der Größe des jeweiligen Kabelquerschnitts, im Bereich der einzelnen Durchführungsflächen 9, ein mehr oder weniger stark gestauchter Materialverzug 13 bildet, der zuverlässig und dauerhaft dicht am jeweiligen Kabelumfang gepreßt elastisch anliegt.

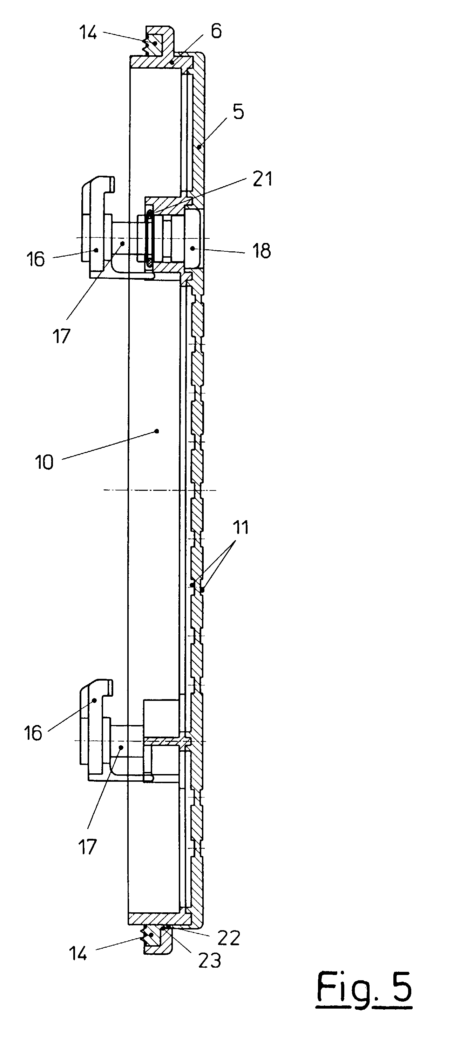

Der Rand oder Rahmen 6, insbesondere aus einem thermoplastischen oder duroplastischen Kunststoff ist erforderlichenfalls durch entsprechende metallische oder nichtmetallische Einlagerungen, formstabilisierend verstärkt. 14 bezeichnet dort eine endlos umlaufende, wulstförmige Dichtung, wie aus den Fig. 4 und 5 klar ersichtlich ist, die insbesondere aus demselben elastomeren Werkstoff hergestellt ist, wie die Kabeldurchführung 5. Insbesondere ist es vorgesehen, daß die Dichtung 14 in einem Arbeitsgang zusammen mit der Herstellung der Kabeldurchführung 5 erfolgt, wie dies die Fig. 5 zeigt. Dort ist ersichtlich, daß die Kabeldurchführung 5 und die Dichtung 14 einstückig über einen dort intermittierend umlaufenden Steg 22 verbunden ist. Zu diesem Zweck sind im Rahmen 6 in gewissen Abständen zueinander entsprechende Schlitze 23 vorgesehen.

Zweckmäßigerweise erfolgt dort die Herstellung dieses Flasches 10 in einen zweistufigen thermoplastischen Spritz- und/oder Pressverfahren, oder durch vulkanisieren des Ganzen. Insbesondere erfolgt die Herstellung dieses Flansches 10 in einem sogenannten Sandwichspritzverfahren.

15 kennzeichnet Flanschverriegelungsvorrichtungen mit den Klemmlaschen 16 und den zugehörigen Spannbolzen 17. Wie aus den Fig. 2 und 3 ersichtlich ist, sind die vorderseitigen Spannbolzenköpfe 18 jeweils mit versenkt angeordneten Formgebungen 19 für den Eingriff eines Schraubendrehers versehen. Diese Formgebungen 19 sind insbesondere mit einem Richtgesperre 24 ausgestattet, derart, daß die Spannbolzen 17 nur in einer bestimmten Drehrichtung, insbesondere nur im Uhrzeigersinn, mittels eines Schraubendrehers betätigt werden können, zum Verschwenken und damit Verriegeln der Klemmlasche 16 der Verriegelungsvorrichtung 15. Ein Verdrehen des Spannbolzens 17 im Gegenuhrzeigersinn ist über die Formgebungen 19 nicht möglich.

Die Verriegelungsvorrichtung 15 kann dort demnach, insbesondere aus sicherheits- und/oder sabotagetechnischen Gründen, nur über eine unmittelbare Betätigung der Klemmlasche 16, insbesondere über eine entsprechende Formgebung 20 an der Klemmlasche 16, d.h. von der Innenseite, beispielsweise eines Verteilerschrankes, her erfolgen.

Die Klemmlaschen 16, sind dort um ca. 90° verschwenkbar begrenzt gelagert und stehen dort jeweils über ein Schraubgewinde mit dem drehbar gelagerten Spannbolzen 17 in Eingriff. Damit ist es möglich, die Klemmlaschen 16, nach dem Einschwenken beispielsweise hinter eine hier nicht näher dargestellte Rahmenkante eines Verteilerkastens, oder dergl., axial hinreichend kraftschlüssig gegenüber auf einem derartigen Verteilerkasten zu sichern. 21 bezeichnet einen O-Ring, als wirksamen Dichtring zwischen dem Rahmen 6 und dem jeweiligen Spannbolzen 17, wie dies aus der Fig. 4 und 5 klar ersichtlich ist.

Ein derartiger Flansch 10 ist einfach, rationell und wirtschaftlich auf Verteilerkästen oder -schränken, oder dergl. nachrüstbar, zumal dort nur ein entsprechender rechteckiger Flanschausbruch erforderlich ist. Außerdem ist die vorgesehenen und beschriebene Flanschverriegelungsvorrichtung, die sowohl von innen, als auch von außen betätigbar ist, über die höhenverstellbaren Klemmlaschen 16 für Blechstärken der Verteilerkästen oder -schränke, oder dergl. von insbesondere 1,5 bis 5 mm einsetzbar. Auch sind durch diese neue Kabeldurchführung vielfach die sogenannten PG-Verschraubungen ersetzbar.

Es liegt im Rahmen der Erfindung, daß anstelle von Kabeldurchführungen, auch Rohr- oder Schlauchdurchführungen vorgesehen sind.

## Patentansprüche

1. Kabeldurchführung, insbesondere plattenförmig, aus einem weichelastischen elastomer vernetzten Werkstoff, die von einem Rahmen (13) umrahmt ist, insbesondere für eine Wand (2) oder Decke oder für einen Boden (3) oder Flansch eines Verteilerschrankes, eines Verteilerkastens, einer Verteilerdose (1) oder eines Zählerschrankes oder dergl., **dadurch gekennzeichnet**, daß der elastomer vernetzte Werkstoff der Kabeldurchführung (5) bei einer Shore-A Härte von 4 bis 30, mit einer Reißdehnungseigenschaft von 400 bis 700 % und mit einer Weiterreißfestigkeit von 9 bis 14 N/mm versehen ist.

2. Kabeldurchführung nach Anspruch 1, dadurch gekennzeichnet, daß der Werkstoff der Kabeldurchführung (5) thermoplastisch verarbeitbar ist.

3. Kabeldurchführung nach Anspruch 1 und 2, dadurch gekennzeichnet, daß die Kabeldurchführung (5) aus einem relativ hartplastischen, formstabilisierenden Werkstoff hergestellt ist.

4. Kabeldurchführung nach Anspruch 3, dadurch gekennzeichnet, daß die Kabeldurchführung (5) stoffschlüssig mit dem Werkstoff des Rahmens (6) verbunden ist.

5. Kabeldurchführung nach Anspruch 1 und 2, dadurch gekennzeichnet, daß eine Verteilerdose (1) mit als Wände (2) ausgebildeten Kabeldurchführungen (5) einstückig hergestellt ist.

6. Kabeldurchführung nach Anspruch 1 und 2, dadurch gekennzeichnet, daß die Kabeldurchführung (5) flanschförmig ausgebildet ist, und daß die im Rahmen (6) des Flansches (10) endlos umlaufende, wulstförmige Dichtung (14) aus demselben Werkstoff hergestellt und einstückig mit der Kabeldurchführung (5) verbunden ist.

7. Kabeldurchführung nach Anspruch 6, dadurch gekennzeichnet, daß im Rahmen (6) des Flansches (10) im Bereich der Dichtung (14) in Abständen zueinander, endlos umlaufend, schlitzförmige Durchbrüche (23), als Werkstoffverbindungskanäle zwischen der Kabeldurchführung (5) und der Dichtung (14) vorgesehen sind.

8. Kabeldurchführung nach Anspruch 6 und 7, dadurch gekennzeichnet, daß der Flansch (10) mit einer Flanschverriegelungsvorrichtung (15) mit in der Höhe verstellbaren Klemmlaschen (16) versehen ist.

9. Kabeldurchführung nach Anspruch 8, dadurch gekennzeichnet, daß die vorderseitigen Spannbolzenköpfe (18) der Spannbolzen (17), die zur Betätigung der Klemmlaschen (16) vorgesehen sind, für den Eingriff eines Schraubendrehers einstückig mit einem Richtgesperre (24) versehen sind.

10. Kabeldurchführung nach Anspruch 1 bis 9, dadurch gekennzeichnet, daß im Bereich der plattenförmigen Kabeldurchführung (5) ein- oder beidseitig, insbesondere koaxial einander gegenüberliegend, Sollbruchstellen (11) mit gleichem oder unterschiedlichem Durchmesser, insbesondere rasterförmig, angeordnet sind.

## Claims

1. Cable feedthrough, especially plate-shaped, consisting of a soft-elastic elastomer cross-linked material which is framed by a frame (13), especially for a wall (2) or cover or for a base (3) or flange of a distributor case, a terminal box, a junction box (1) or a meter case or the like, characterised thereby that the elastomer cross-linked material of the cable feedthrough (5) in the case of a Shore A hardness of 4 to 30 is provided with an elastic limit property of 400 to 700% and with a further tensile strength of 9 to 14 N/mm.

2. Cable feedthrough according to claim 1, characterised thereby that the material of the cable feedthrough (5) can be processed thermoplastically.

3. Cable feedthrough according to claim 1 and 2, characterised thereby that the cable feedthrough (5) is made from a relatively hard-plastic shape-stabilising material.

4. Cable feedthrough according to claim 3, characterised thereby that the cable feedthrough (5) is materially interlocked with the material of the frame (6).

5. Cable feedthrough according to claim 1 and 2, characterised thereby that a junction box (1) is produced integrally with cable feedthroughs (5) formed as walls (2).

6. Cable feedthrough according to claim 1 and 2, characterised thereby that the cable feedthrough (5) is constructed in flange shape and that the beadlike seal (14), which runs around endlessly in the frame (6) of the flange (10), is made of the same material and integrally connected with the cable feedthrough (5).

7. Cable feedthrough according to claim 6, characterised thereby that slotlike passages (23), which run around endlessly in the frame (6) of the flange (10) in the region of the seal (14) and at spacings from one another, are provided as material connection channels, between the cable feedthrough (5) and the seal (14).

8. Cable feedthrough according to claim 6 and 7, characterised thereby that the flange (10) is provided with a flange locking device (15) with clamping straps (16) adjustable in height.

9. Cable feedthrough according to claim 8, characterised thereby that the tightening bolt heads (18), which are at the front side, of the tightening bolts (17), which are provided for the actuation of the clamping straps (16), are integrally provided with a directional ratchet (24) for engagement of a screwdriver.

10. Cable feedthrough according to claim 1 to 9, characterised thereby that intended break locations (11) with same or different diameter, especially raster-shaped, are arranged in the region of the plate-shaped cable feedthrough (5) at one or both sides, especially coaxially opposite one another.

## Revendications

1. Passe-câble, en particulier en forme de plaque, réalisé en un matériau réticulé élastomère à élasticité molle, lequel est entouré d'un cadre (13), et destiné en particulier à une paroi (2) ou le couvercle, ou bien pour un fond (3) ou un rebond surajouté d'une armoire de distribution, d'un boîtier de distribution, d'une douille de distribution (1) ou d'une armoire à compteur, ou analogues, caractérisé en ce que le matériau réticulé élastomère du passe-câble (5), pour une dureté Shore A de 4 à 30, présente un coefficient d'allongement à la rupture de 400 à 700 %, et une résistance à la propagation d'une rupture amorcée de 9 à 14 N/mm.

2. Passe-câble selon la revendication 1, caractérisé en ce que le matériau du passe-câble (5) peut subir un traitement thermoplastique.

3. Passe-câble selon les revendications 1 et 2, caractérisé en ce que le passe-câble (5) est réalisé en une matière plastique relativement dure et déformable.

4. Passe-câble selon la revendication 3, caractérisé en ce que le passe-câble (5) est constitué de la même matière que le cadre (6) auquel il est relié.

5. Passe-câble selon les revendications 1 et 2, caractérisé en ce qu'une douille de distribution (1) est réalisée en une seule pièce avec des parois (2) conformées en passe-câbles (5).

6. Passe-câble selon les revendications 1 et 2, caractérisé en ce que le passe-câble (5) est réalisé en forme de rebord, et en ce que le joint (14) en forme de boudin, entourant sans interruption l'intérieur du cadre (6) du rebord (10) est réalisé en la même matière et constituant une seule pièce avec le passe-câble (5).

7. Passe-câble selon la revendication 6, caractérisé en ce qu'à l'intérieur du cadre (6) du rebord (10) sont prévus, au voisinage du joint (14), des perçages (23) en forme de fentes, disposés sans interruption sur le pourtour à des distances réciproques, qui servent de canaux de liaison entre le passe-câble (5) et le joint (14).

8. Passe-câble selon les revendications 6 et 7, caractérisé en ce que le rebord (10) est muni d'un dispositif (15) de verrouillage du rebord comportant des pattes de serrage (16) dont la hauteur est réglable.

9. Passe-câble selon la revendication 8, caractérisé en ce que les têtes (18) des boulons de serrage (17) disposées sur la face avant, qui sont prévues pour manoeuvrer des pattes de serrage (16), comportent, de manière intégrée à ces têtes, un encliquetage (24) destiné à l'insertion d'un tournevis.

10. Passe-câble selon les revendications 1 à 9, caractérisé en ce qu'au voisinage du passe-câble (5) en forme de plaque, sont disposés, sur un seul ou sur les deux côtés, notamment de manière à se faire face axialement, des points de prérupture (11) de diamètres égaux ou différents, en particulier disposés de manière à former une grille.
